# EUROPÄISCHE PATENTSCHRIFT

(11) **EP 3 505 879 B1**
(45) Veröffentlichungstag und Bekanntmachung des Hinweises auf die Patenterteilung: **07.07.2021**
(21) Anmeldenummer: 18205175.5
(22) Anmeldetag: 08.11.2018
(51) Int. Cl.: G01G 23/14

(54) **LEBENSMITTELVERARBEITUNGSSYSTEM UND -VERFAHREN MIT BESTIMMUNG VON VARIABLEM TARA-WERT**
FOOD PROCESSING SYSTEM AND METHOD WITH DETERMINATION OF VARIABLE TARE WEIGHT
SYSTÈME DE TRAITEMENT DES DENRÉES ALIMENTAIRES ET PROCÉDÉ DE DÉTERMINATION DE LA VALEUR TARE VARIABLE

(30) Priorität: 27.12.2017 DE 102017131342
(43) Veröffentlichungstag der Anmeldung: 03.07.2019
(73) Patentinhaber: Weber Maschinenbau GmbH Breidenbach, 35236 Breidenbach (DE)
(72) Erfinder:
(74) Vertreter: Grünecker Patent- und Rechtsanwälte PartG mbB

(56) Entgegenhaltungen:
- EP-A1- 3 409 433
- EP-A2- 2 463 204
- DE-A1-102013 205 043

## Beschreibung

Die Erfindung betrifft ein Lebensmittelverarbeitungssystem gemäß dem Oberbegriff von Anspruch 1 und ein Verfahren zum Verarbeiten von Lebensmittelprodukten gemäß dem Oberbegriff von Anspruch 6.

Das gattungsgemäße Lebensmittelverarbeitungssystem umfasst eine Lebensmittelaufschneidemaschine mit einer Produktzufuhr, die aufzuschneidende Lebensmittelprodukte einem Schneidbereich zuführt, in welchem sich ein Schneidmesser rotierend und/oder umlaufend bewegt, um die zugeführten Produkte in Scheiben zu schneiden.

Derartige Lebensmittelaufschneidemaschinen werden auch als Slicer oder Hochgeschwindigkeits-Slicer bezeichnet. Mit Hochgeschwindigkeitsslicern können stangen- oder laibförmige Lebensmittelprodukte mit hohen Schneidgeschwindigkeiten von mehr als Hundert oder mehr als Tausend, und insbesondere von einigen Tausend Scheiben pro Minute aufgeschnitten werden. In vielen Anwendungen werden aus den abgetrennten Scheiben auf einer durch einen Portionierer gebildeten Ablagefläche gestapelte oder geschindelte Portionen gebildet. Es ist im Stand der Technik bekannt, der Lebensmittelaufschneidemaschine eine Zwischenblattbereitstellungsvorrichtung zuzuordnen, die auch als Interleaver bezeichnet wird. Der Interleaver dient dazu, zwischen unmittelbar aufeinanderfolgenden Scheiben einer Portion Zwischenblätter einzubringen, damit die Lebensmittelscheiben später leichter voneinander getrennt werden können. Als Material für die Zwischenblätter dient beispielsweise Papier oder eine Kunststofffolie.

Lebensmittelverarbeitende Betriebe stellen zunehmende Anforderungen hinsichtlich der Gewichtsgenauigkeit der von den Lebensmittelverarbeitungssystemen erzeugten Lebensmittelportionen. Dabei darf ein gewisser Gewichtswert für einzelne Portionen sowie ein gewisser Durchschnittswert für mehrere Portionen nicht unterschritten werden, um die gesetzlichen Anforderungen zu erfüllen. Gleichzeitig ist es aus Gründen der Wirtschaftlichkeit aber auch notwendig, dass die Lebensmittelportionen das Mindestgewicht nicht wesentlich überschreiten, da dadurch Lebensmittelprodukt verbraucht wird, ohne dass dieses dem Kunden in Rechnung gestellt werden kann. Deswegen ist in derartigen Lebensmittelverarbeitungssystemen eine Wiegevorrichtung vorgesehen, die einen Tara-Wert berücksichtigen kann, der insbesondere in Abhängigkeit von einer verwendeten Verpackung eingestellt werden kann. Der Tara-Wert bezeichnet das erwartete Verpackungsgewicht, das von dem gemessenen Gewicht einer verpackten Lebensmittelportion abgezogen wird, um das tatsächliche Produktgewicht zu erhalten. Es sind Systeme bekannt, in denen für eine Vielzahl von verschiedenen Verpackungen, verschiedene konstante Tara-Werte hinterlegt sein können, und in Abhängigkeit vom Verpackungstyp abgerufen werden können.

Aus der EP 3 409 433 A1 ist ein Verfahren zum Verarbeiten von Lebensmittelprodukten bekannt, bei welchem Lebensmittelprodukte mehrspurig zu einzelnen Portionen aufgeschnitten werden, mehrspurig gefördert werden und von diesen mehreren Produktionsspuren auf eine reduzierte Anzahl von Ausgangsspuren und/oder zwischen wechselnden Spuren verlagert werden. Dabei werden die Positionen der einzelnen Portionen mittels einer Steuerung nachverfolgt. In der Ausgangsspur kann eine Endkontrollwaage angeordnet sein, um das jeweilige Gewicht der einzelnen Portionen zu messen.

Aus der EP 2 463 204 A2 ist eine Verpackungsmaschine mit Überwachungseinrichtung bekannt, wobei die Überwachungseinrichtung eine Eigenschaft der zu verarbeitenden Produkte erfasst, so dass eine nachgeordnete Sortierstation die Verpackungen mit den Produkten je nach Kategorie einsortieren kann.

Aus der DE 10 2013 205 043 A1 ist eine Verpackungsmaschine bekannt, welche einen Scanner umfasst, der von einem aufzuschneidenden Lebensmittelriegel Daten über die innere und/oder äußere Struktur ermittelt, wodurch das Aufschneiden des Lebensmittelriegels gesteuert wird.

Es ist die Aufgabe der Erfindung, ein Lebensmittelverarbeitungssystem und ein Verfahren zum Verarbeiten von Lebensmittelprodukten zur Verfügung zu stellen, bei denen die Genauigkeit der Erfassung des Gewichts des Lebensmittelproduktanteils einer verpackten Lebensmittelportion verbessert wird.

Die Erfindung stellt ein Lebensmittelverarbeitungssystem mit einer Lebensmittelaufschneidemaschine bereit, die eingerichtet ist, Lebensmittelprodukte zu Lebensmittelportionen aufzuschneiden, einer Verpackungsmaschine, die eingerichtet ist, die vollständigen Lebensmittelportionen jeweils zu verpacken, und wenigstens einer Wiegevorrichtung, wobei die Lebensmittelaufschneidemaschine und/oder die Verpackungsmaschine eingerichtet sind, die Lebensmittelportionen jeweils mit einem variablen Verpackungsbestandteil zu kombinieren, und wobei mittels der wenigstens einen Wiegevorrichtung das Gewicht der jeweiligen Lebensmittelportion, umfassend den variablen Verpackungsbestandteil, bestimmt werden kann. Erfindungsgemäß ist eine Steuerung vorgesehen, die eingerichtet ist, in Abhängigkeit von Betriebsdaten einen variablen Tara-Wert zu bestimmen, der dem Gewicht des variablen Verpackungsbestandteils entspricht. Insbesondere wird der variable Tara-Wert für jede Lebensmittelportion oder für Gruppen von Lebensmittelportionen jeweils neu bestimmt. Dadurch ist es möglich, das Gewicht der Verpackung besser anzunähern, und somit beim Wiegen der verpackten Lebensmittelportion genauer das Gewicht des darin enthaltenen Lebensmittelprodukts zu bestimmen. Insbesondere wird der variable Tara-Wert bestimmt, indem er automatisch in Abhängigkeit von Betriebsdaten berechnet wird. In manchen Ausführungsformen kann der Tara-Wert fließend im Aufschneidebetrieb angepasst werden, d. h. er kann sich über mehrere Scheiben und/oder über mehrere Lebensmittelportionen verändern. Die Veränderung des Tara-Werts ist immer in Abhängigkeit der Betriebsdaten, die der Steuerung vorliegen, wobei die Steuerung insbesondere Daten bezüglich des Lebensmittelprodukts, bezüglich des Schneidprogramms, bezüglich der Verpackungsbestandteile usw. verfügbar haben und für die Bestimmung heranziehen kann.

Insbesondere kann die Steuerung den variablen Tara-Wert mit einem konstanten Tara-Wert, beispielsweise einem bekannten Gewicht einer normierten Verpackung, addieren, um einen Gesamt-Tara-Wert zu bestimmen. Dann subtrahiert die Steuerung den Gesamt-Tara-Wert von einem mit der Wiegevorrichtung gemessenen Gewicht, um das Gewicht des in einer Lebensmittelportion enthaltenen Lebensmittelprodukts zu erhalten.

In einer Ausführungsform ist eine Zwischenblattbereitstellungsvorrichtung bei der Lebensmittelaufschneidemaschine vorgesehen, wobei die Zwischenblattbereitstellungsvorrichtung eingerichtet ist, Zwischenblätter bzw. Zwischenblattmaterial zwischen und/oder unter Lebensmittelscheiben der Lebensmittelportionen einzubringen. Bei dem Zwischenblattmaterial handelt es sich insbesondere um Papier oder eine Kunststofffolie, die mittels der Zwischenblattbereitstellungsvorrichtung zwischen die beim Aufschneiden herabfallenden Lebensmittelscheiben eingeschossen wird. Je nach Schneidprogramm, Scheibenanzahl, Produktgröße bzw. -form und Parameter der Zwischenblattbereitstellungsvorrichtung kann das pro Lebensmittelportion eingebrachte Zwischenblattmaterial variieren, und somit stellt das Zwischenblattmaterial einen variablen Verpackungsbestandteil dar. Insbesondere kann die Menge des Zwischenblattmaterials in Abhängigkeit von der Scheibenanzahl variieren, da bei mehr Scheiben pro Lebensmittelportion mehr Lagen an Zwischenblattmaterial eingebracht werden müssen. Ein anderer Parameter des Schneidprogramms, der die Menge an Zwischenblattmaterial bestimmen kann, ist die Schindelhöhe bzw. Stapelhöhe der Lebensmittelportion.

Weiterhin kann eine Lebensmittelscanvorrichtung vor der Lebensmittelaufschneidemaschine vorgesehen sein, die mittels Röntgen Informationen über das Innere eines Lebensmittelproduktes, insbesondere dessen Dichte, oder mittels eines Lichtschnittverfahrens die Außengeometrie des Lebensmittelproduktes ermitteln kann. Weiterhin kann die Außenkontur und innere Struktur des Lebensmittelprodukts auch durch eine Schnittbildkamera ermittelt werden, welche die Schnittfläche durch die Schneidebene hindurch erfasst.

Die produktspezifischen Daten werden der Steuerung zugeführt, die dann die Menge des notwendigen Zwischenblattmaterials bestimmt, und die Zwischenblattbereitstellungsvorrichtung so ansteuert, dass diese entsprechende Zwischenblätter zwischen die einzelnen Lebensmittelscheiben zuführt. Insbesondere kann ein längerer Abschnitt von Zwischenblattmaterial für große Lebensmittelscheiben in der Mitte eines Lebensmittelproduktes notwendig sein, sowie ein kürzerer Abschnitt von Zwischenblattmaterial für kleinere Scheiben am Lebensmittelproduktanfang und -ende. In manchen Ausführungsformen kann der Produktkonturverlauf des Lebensmittelprodukts aber auch vorbekannt sein und der Steuerung lediglich durch Eingabe eines Produkttyps übermittelt bzw. darin aus einem Speicher abgerufen werden. Auch dann ist es möglich, die Menge des eingebrachten Zwischenblattmaterials zu bestimmen. Zudem kann die Steuerung auf die Daten einer Steuerung der Zwischenblattbereitstellungsvorrichtung zugreifen, und deren Vorgabewerte bzw. Voreinstellungen auslesen, die insbesondere Informationen über die Anzahl der Zwischenblätter, die Dicke der Folie und/oder das Format der Folie geben können. Weiterhin kann aus der Steuerung die Vorgabe für die jeweils abgetrennte Länge eines Zwischenblatts ausgelesen werden. Alternativ kann die abgetrennte Länge eines Zwischenblatts auch sensorisch erfasst werden. Die abgetrennte Länge wird dann jeweils pro Zwischenblatt oder als Gesamtlänge pro Lebensmittelportion an die Steuerung übermittelt, die dann den variablen Tara-Wert bestimmt.

Weiterhin ist es auch möglich, dass weitere Parameter des Zwischenblattmaterials sensorisch durch eine laufende Messung bestimmt werden, beispielsweise die Folienbreite und/oder Foliendicke, oder auch die Dichte der Folie. Dafür können beispielweise Lichtsensoren wie Lichtschranken eingesetzt werden, für die Bestimmung der Dichte der Folie auch Sensoren, die eine Lichtbrechung auswerten. Weiterhin kann die Steuerung auch auf die Daten einer Steuerung der Lebensmittelaufschneidemaschine zugreifen und dort Beladepausen und/oder Leerschnitte ermitteln, die Schaltsignale bzw. Veränderungssignale bilden, die für die Portionsbildung aussagekräftig sind. Daraus können dann wiederum Rückschlüsse auf die zugeführten Zwischenblätter gezogen werden.

In einer Ausführungsform ist die Wiegevorrichtung stromabwärts nach der Verpackungsmaschine angeordnet, und eingerichtet, das Gewicht der fertig verpackten Lebensmittelportion oder Lebensmittelportionen zu bestimmen. Insbesondere handelt es sich dabei um eine sogenannte Fertigverpackungsverordnungs-Waage (FPV-Waage), die gesetzlich zur Sicherstellung von Portionsmindestgewichten und Durchschnittsportionsmindestgewichten vorgeschrieben ist. Die mit dieser Waage erfassten Gewichtswerte, beispielsweise Gewichtswerte der einzelnen Lebensmittelportionen oder der Durchschnittsgewichtswert von einer Gruppe bzw. Charge von Lebensmittelportionen können an die Steuerung zurückgeführt werden, damit die Lebensmittelaufschneidemaschine so gesteuert werden kann, dass ein optimales Portionsgewicht erreicht wird. Insbesondere findet über die Rückführung der Gewichtswerte von der FPV-Waage eine relativ träge Regelung statt, mit der über eine hohe Portionsanzahl die Einstellungen der Lebensmittelaufschneidemaschine optimiert werden, um eine Feineinstellung der Lebensmittelportionsgewichte zu erreichen.

Zusätzlich oder alternativ kann eine Wiegevorrichtung nach der Lebensmittelaufschneidemaschine und vor der Verpackungsmaschine angeordnet werden und eingerichtet sein, das Gewicht der aufgeschnittenen Lebensmittelportion zu bestimmen. Bei dieser Wiegevorrichtung handelt es sich insbesondere um eine Durchlaufkontrollwaage. Die Durchlaufkontrollwaage kann in Ergänzung zur FPV-Waage vorgesehen sein. Die Durchlaufkontrollwaage ermöglicht die Erfassung des Gewichts der Lebensmittelportionen, bevor diese von der Verpackungsmaschine verpackt werden. Allerdings weisen die Lebensmittelportionen zu diesem Zeitpunkt insbesondere schon den variablen Verpackungsbestandteil auf, beispielsweise Unterlegblätter oder Zwischenblätter, die beim oder nach dem Aufschneiden mit der Lebensmittelportion kombiniert werden.

Vorteilhafterweise ist das Lebensmittelverarbeitungssystem und insbesondere dessen Steuerung so eingerichtet, dass das mit der Wiegevorrichtung oder den Wiegevorrichtungen bestimmte Gewicht bei der Regelung des Betriebs der Lebensmittelaufschneidemaschine berücksichtigt wird, um die Genauigkeit des Gewichts der Lebensmittelportion bzw. von Gruppen von Lebensmittelportionen zu erhöhen. Insbesondere wird dafür das jeweils von der FPV-Waage bestimmte Portionsgewicht und/oder Durchschnittsgewicht und/oder das von der Durchlaufkontrollwaage bestimmte Portionsgewicht und/oder Durchschnittsgewicht berücksichtigt. Dabei kann eine trägere Regelung für die Rückführsignale aus der FPV-Waage vorgesehen werden als für die Signale der Durchlaufkontrollwaage.

Das Signal der FPV-Waage und/oder das Signal der Durchlaufkontrollwaage kann jeweils mittels des variablen Tara-Werts korrigiert werden. Wenn zwischen der Durchlaufkontrollwaage und der FPV-Waage zusätzliche variable Verpackungsbestandteile zur Lebensmittelportion hinzugefügt werden, so kann auch jeweils ein unterschiedlicher variabler Tara-Wert für die Durchlaufkontrollwaage und die FPV-Waage bestimmt werden.

Erfindungsgemäß wird weiterhin ein Verfahren zum Verarbeiten von Lebensmittelprodukten in einem Lebensmittelverarbeitungssystem bereitgestellt, wobei zunächst ein Lebensmittelprodukt zu wenigstens einer Lebensmittelportion aufgeschnitten wird, und dabei oder danach die Lebensmittelportion mit Verpackungsmaterial kombiniert wird, und das Gewicht der Lebensmittelportion mit wenigstens einem variablen Verpackungsbestandteil bestimmt wird, wobei ausgehend von Betriebsdaten der Lebensmittelverarbeitungssystems ein variabler Tara-Wert für die Lebensmittelportionen berechnet wird, der dem Gewicht eines variablen Verpackungsbestandteils entspricht.

Die Lebensmittelportion wird insbesondere in einer Verpackungsmaschine in eine Verpackung verpackt, wobei das Gewicht der Verpackung bekannt ist und einen konstanten Tara-Wert bildet. Zusätzlich oder alternativ kann die Zusammensetzung bzw. Zusammenstellung der Verpackung bekannt sein. Daraus kann dann insbesondere auf das Verpackungsgewicht geschlossen werden, und entsprechend auf den konstanten Tara-Wert. Der variable Tara-Wert und der konstante Tara-Wert werden beide vom gemessenen Gewicht der verpackten Lebensmittelportion abgezogen, um den tatsächlichen Gewichtsanteil des Lebensmittelproduktes in der Lebensmittelportion zu bestimmen.

In einer Ausführungsform umfasst der variable Verpackungsbestandteil ein Etikett, das auf die Verpackung aufgebracht oder darin eingelegt wird. Insbesondere kann es sich dabei um ein Klebeetikett handeln, das von außen auf die Verpackung aufgeklebt wird. Alternativ kann es sich aber auch um ein von innen aufgeklebtes Etikett handeln. Weiterhin kann ein Etikett vorgesehen sein, das frei in die Verpackung eingelegt wird. Die Etiketten können dabei verschiedene Größen aufweisen, die entsprechend bei der Bestimmung des variablen Tara-Werts berücksichtigt werden.

In einer Ausführungsform kann der variable Verpackungsbestandteil eine Unterlage umfassen, auf der die Lebensmittelportion angeordnet wird. Bei der Unterlage kann es sich beispielsweise um ein L-Board handeln, auf das die Lebensmittelportion aufgelegt wird, und das dann bereichsweise um die Lebensmittelportion gefaltet wird, so dass es nicht nur einen Bereich aufweist, der unter der Lebensmittelportion angeordnet ist, sondern auch einen neben der Lebensmittelportion angeordneten und ggf. teilweise oberhalb der Lebensmittelportion angeordneten Bereich. Auch derartige Unterlagen können je nach Größe der Lebensmittelportion oder nach Kriterien für die Verpackung eine unterschiedliche Größe aufweisen, und bilden somit einen variablen Verpackungsbestandteil, der in dem variablen Tara-Wert reflektiert wird.

Insbesondere umfasst der variable Verpackungsbestandteil aber Zwischenblattmaterial, das beim Aufschneiden zwischen die Lebensmittelscheiben der Lebensmittelportion in Form von Zwischenblättern eingebracht wird. Das Zwischenblattmaterial bzw. die Zwischenblätter werden insbesondere durch eine Vorrichtung zum Bereitstellen von bandförmigem Zwischenblattmaterial während des Aufschneidens zwischen die auf die Portionierablage herabfallenden Lebensmittelscheiben eingeschossen. Bei dem Zwischenblattmaterial handelt es sich insbesondere um Papier oder Kunststofffolie. Die Anzahl und Größe der Zwischenblätter kann von Portion zu Portion variieren. Dies wird bei der Bestimmung des variablen Tara-Werts berücksichtigt. Beispielsweise kann beim Aufschneiden von Käse aufgrund der darin vorliegenden Löcher die Anzahl der Scheiben pro Portion variieren, wodurch auch die Anzahl der Zwischenblätter variiert.

Insbesondere können die Betriebsdaten einen Vorgabewert bezüglich des variablen Verpackungsbestandteils umfassen. Bei dem Vorgabewert handelt es sich insbesondere um einen Wert, der von einer Steuerung vorgegeben wird, beispielsweise der Steuerung einer Zwischenblattbereitstellungsvorrichtung, einer Etikettiermaschine oder einer Verpackungsmaschine. Die Vorgabewerte können beispielsweise die Anzahl der Zwischenblätter, die vorgegebene Länge der Zwischenblätter, die vorgegebene Größe von Etiketten oder die vorgegebene Größe von Unterlagen betreffen.

Zusätzlich oder alternativ können die für die Berechnung des variablen Tara-Werts berücksichtigten Betriebsdaten einen Messwert bezüglich des variablen Verpackungsbestandteils umfassen. Bei dem Messwert kann es sich beispielweise um die sensorisch erfasste Größe, Dicke oder das Material von variablen Verpackungsbestandteilen handeln. Beispielsweise kann die jeweils pro Zwischenblatt abgetrennte Länge von einer Materialbahn sensorisch bestimmt werden. Weiterhin kann eine laufende sensorische Erfassung der Breite und/oder Dicke des Zwischenblattmaterials erfolgen. Auch ist es möglich, die Dichte des Zwischenblattmaterials sensorisch zu bestimmen, z. B. mit Lichtsensoren über Lichtbrechung.

Zusätzlich oder alternativ können die bei der Bestimmung des variablen Tara-Werts berücksichtigten Betriebsdaten einen Vorgabewert oder Messwert bezüglich der Lebensmittelportionen umfassen. Beispielsweise kann die Scheibenanzahl oder Stapelhöhe der Lebensmittelportionen sensorisch erfasst werden. Allerdings können die Betriebsdaten auch aus wenigstens einem Vorgabewert der Steuerung bezüglich der Erzeugung der Lebensmittelportionen ausgelesen werden. So kann aus den in der Steuerung vorliegenden Daten die Scheibenanzahl und ggf. die Stapelhöhe der Lebensmittelportion entnommen werden. Weiterhin sind aus der Steuerung der Lebensmittelaufschneidemaschine auch Informationen zu Beladungen und Beladepausen und/oder Leerschnitten bekannt, wodurch beispielsweise der Abschluss einer Portionsbildung erkannt werden kann, woraus dann in Kombination mit weiteren Betriebsdaten oder sensorisch erfassten Daten, eine genauere Bestimmung des variablen Tara-Werts möglich wird.

Weiterhin ist es alternativ oder zusätzlich auch möglich, dass die Betriebsdaten einen Messwert oder Vorgabewert bezüglich der Lebensmittelprodukte umfassen. So kann das Lebensmittelprodukt vor dem Aufschneiden gescannt und/oder gewogen werden, wodurch genauere Informationen über die Eigenschaften des Lebensmittelprodukts, wie dessen Größe, äußere Gestalt und Dichte gewonnen werden, die Auswirkungen auf das Gewicht des variablen Verpackungsbestandteils haben können. Beispielsweise werden für größere Lebensmittelscheiben größere Zwischenblätter zwischen die Scheiben der Lebensmittelportionen eingebracht und kleinere Zwischenblätter für kleinere Lebensmittelscheiben.

Die Erfindung wird nun anhand einer beispielhaften Ausführungsform beschrieben. Dabei zeigen:
- Figur 1: eine Seitenansicht einer Ausführungsform eines erfindungsgemäßen Lebensmittelverarbeitungssystems;
- Figur 2: eine Schnittansicht von der Seite einer verpackten Lebensmittelportion; und
- Figur 3: eine Schnittansicht von der Seite einer weiteren verpackten Lebensmittelportion.

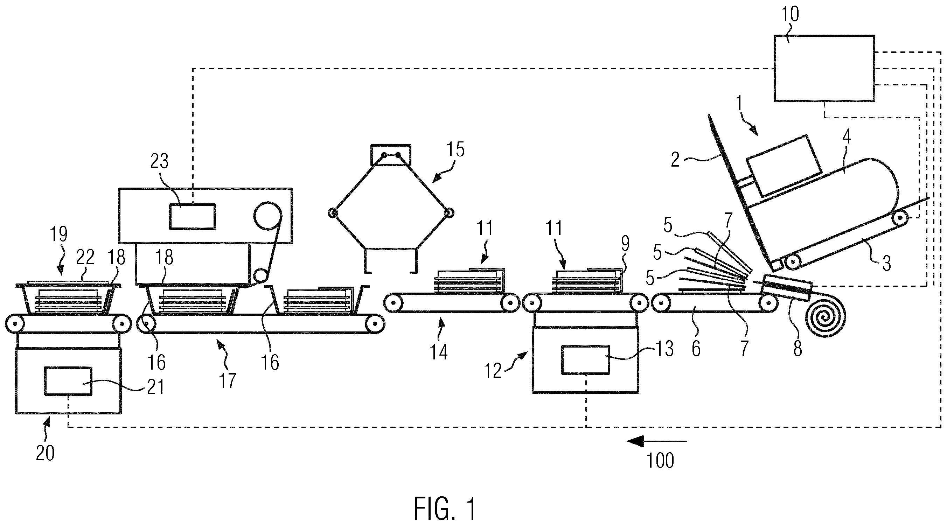

Die in Fig. 1 dargestellte Ausführungsform eines erfindungsgemäßen Lebensmittelverarbeitungssystems umfasst eine Lebensmittelaufschneidemaschine 1, die ein rotierendes Schneidmesser 2 aufweist, das insbesondere als Sichelmesser oder umlaufendes Kreismesser ausgestaltet ist. Mittels eines Vorschubbands 3 wird ein Lebensmittelprodukt 4 dem Schneidmesser 2 zugeführt, so dass Lebensmittelscheiben 5 davon abgeschnitten werden. Gleichzeitig wird ein Zwischenblatt 7 aus einer Zwischenblattbereitstellungsvorrichtung 8 abgetrennt, insbesondere auch durch das Schneidmesser 2.

Während die Lebensmittelscheiben 5 auf eine Portionierablage 6 herabfallen, werden daher die Zwischenblätter 7 erfasst und mit abgelegt. Bei der Zwischenblattbereitstellungsvorrichtung 8 handelt es sich insbesondere um eine Vorrichtung, die bandförmiges Zwischenblattmaterial von einer Rolle entnimmt und zwischen die Lebensmittelscheiben einschießt. Auf der Portionierablage 6 kann eine Unterlage 9 vorgesehen sein, auf der die Lebensmittelscheiben 5 angeordnet werden. Bei der Unterlage 9 kann es sich insbesondere um ein sogenanntes L-Board handeln, das zumindest bereichsweise um die Lebensmittelscheiben 5 gefaltet werden kann, und auf dem Information bezüglich des Lebensmittelproduktes aufgedruckt sein kann. Insbesondere besteht die Unterlage 9 aus Karton oder Kunststoffmaterial. Aber auch sogenannte Underleaver aus Papier oder Folie kommen in Frage. Diese können gegebenenfalls auch über die Zwischenblattbereitstellungsvorrichtung 8 eingebracht werden.

Die Portionierablage 6 kann insbesondere als Förderband ausgestaltet sein. Der Aufschneideprozess der Lebensmittelaufschneidemaschine wird durch eine Steuerung 10 gesteuert, wobei es sich bei der Steuerung insbesondere um eine elektronische Steuerung handelt, deren Einrichtung durch ihre Programmierung bestimmt wird. Die Steuerung 10 ist insbesondere eingerichtet, die Lebensmittelaufschneidemaschine, d. h. deren Antriebe für das Messer 2, für das Vorschubband 3 und ggf. für einen nicht dargestellten Greifer zu steuern, sowie die Zwischenblattbereitstellungsvorrichtung 7. Weiterhin ist die Steuerung auch eingerichtet, die Portionierablage 6 zu steuern, d. h. insbesondere vollständige Portionen 11 mittels des Antriebs der Portionierablage in der Förderrichtung 100 des Lebensmittelverarbeitungssystems abzufördern. Die Lebensmittelportion 11 läuft dann zunächst auf eine Wiegevorrichtung 12 in Form einer Durchlaufkontrollwaage. Die Wiegevorrichtung 12 erfasst das Gewicht der Lebensmittelportion 11 inklusive der Zwischenblätter 7 und Unterlage 9.

Erfindungsgemäß ist die zentrale Steuerung 10, die beispielsweise in der Lebensmittelaufschneidemaschine 1 oder als separate Steuerung vorgesehen sein kann, oder eine lokale Steuerung 13 der Wiegevorrichtung 12, ausgelegt, in Abhängigkeit von Betriebsdaten des Lebensmittelverarbeitungssystems einen variablen Tara-Wert zu bestimmen, der dem Gewicht des variablen Verpackungsbestandteils entspricht, der durch die Zwischenblätter 7 und die Unterlage 9 gebildet wird. Nachdem die Steuerung 10, 13 keine direkte Kenntnis vom Gewicht des variablen Verpackungsbestandteils hat, wird dieser in Abhängigkeit von Betriebsdaten berechnet und als variabler Tara-Wert verwertet. Der variable Tara-Wert wird insbesondere zu einem konstanten Tara-Wert addiert, der dem bekannten Gewicht von bei mehreren Lebensmittelportionen verwendeten, gleichförmigen Verpackungsbestandteilen entspricht. Somit kann ausgehend von dem durch die Wiegevorrichtung 12 gemessenen Gewicht nach Abzug des konstanten und variablen Tara-Werts ein genauer Wert für die Lebensmittelportion ohne Verpackungsmaterial bestimmt werden. Dieser Wert kann zur Regelung der Lebensmittelaufschneidemaschine 1 mittels der Steuerung 10 eingesetzt werden. Somit kann die Genauigkeit des Gewichts der Lebensmittelportionen erhöht werden.

An die Wiegevorrichtung 12 schließt sich in Förderrichtung 100 ein Pufferband 14 an, auf dem mehrere Lebensmittelportionen 11 gepuffert werden können. Ein Einlegeroboter 15, insbesondere ein Delta-Roboter, ergreift die Lebensmittelportionen 11 vom Pufferband und legt jeweils eine oder mehrere Lebensmittelportionen in eine Verpackungsschale 16 ein, die dann in der Verpackungsmaschine 17 mit einem Verpackungsoberteil 18 verschlossen wird. Insbesondere kann es sich bei dem Verpackungsoberteil um eine Folie handeln, die durch die Verpackungsmaschine 17 auf die Verpackungsschale 16 aufgeschweißt wird. Die verpackte Lebensmittelportion 19 wird dann in Förderrichtung 100 auf eine Wiegevorrichtung 20 gefahren, die das Gewicht der verpackten Lebensmittelportion 19 bestimmt. Die Wiegevorrichtung 20 kann eine Steuerung 21 aufweisen, die insbesondere in Kommunikation mit den Steuerungen 10 und 13 ist. Allerdings kann auch vorgesehen sein, dass die Funktion der Steuerung 13 oder 21 von einer zentralen Steuerung 10 bzw. einer Steuerung der Lebensmittelaufschneidemaschine übernommen wird.

Bei der Wiegevorrichtung 20 handelt es sich um eine Fertigverpackungsverordnungs-Waage (FPV-Waage), die bestimmt, ob das Gewicht der verpackten Lebensmittelportion innerhalb eines vorbestimmten Bereichs ist, und ob der Durchschnittsgewichtswert einer Gruppe von verpackten Lebensmittelportionen 19 ebenfalls in einem vorbestimmten Bereich ist. Weiterhin kann der von der Wiegevorrichtung 20 bestimmte Gewichtswert für die Steuerung der Lebensmittelaufschneidemaschine 1 zurückgeführt werden. Insbesondere wird das gemessene Gewicht um den konstanten Tara-Wert und den variablen Tara-Wert bereinigt, indem diese davon abgezogen werden. Der konstante Tara-Wert ist bekannt, beispielsweise handelt es sich hier um das Gewicht der Verpackungsschale 16 und meist auch des Verpackungsoberteils 18. Allerdings können auch variable Verpackungsbestandteile durch die Verpackungsmaschine 17 zur verpackten Lebensmittelportion 19 zugeführt werden, beispielweise ein Etikett 22, das auf die Verpackung, insbesondere das Verpackungsoberteil 18, aufgeklebt wird. Das Etikett kann beispielsweise verschiedene Größen aufweisen oder aus verschiedenen Materialien bestehen. Ausgehend von den Betriebsdaten der Verpackungsmaschine 17, die in einer darin vorgesehenen Steuerung 23 oder in einer zentralen Steuerung 10 erfasst werden, kann nun das Gewicht des variablen Verpackungsbestandteils in Abhängigkeit von den vorliegenden Betriebsdaten bestimmt werden, beispielsweise in Abhängigkeit der Ansteuerung einer Etikettiervorrichtung oder in Abhängigkeit von einem Sensor, wie beispielsweise einer Kamera, die es ermöglicht, die Größe des Etiketts zu erfassen.

Das näherungsweise bestimmte Gewicht des variablen Verpackungsbestandteils wird dann als variabler Tara-Wert weiter verarbeitet, und insbesondere zu dem bereits bestimmten variablen Tara-Anteil der Wiegevorrichtung 12 hinzuaddiert. Somit kann eine höhere Genauigkeit der jeweils bestimmten Lebensmittelportionsgewichte auf der ersten Wiegevorrichtung 12 und der zweiten Wiegevorrichtung 20 erreicht werden.

Die Steuerung 10 der Lebensmittelaufschneidmaschine kann eine erfindungsgemäße Tara-Wert-Funktion aufweisen, und somit Messwerte von beiden Waagen 12, 20 verarbeiten. Insbesondere ist es möglich, dass die verpackte Lebensmittelportion 19 nur manche der vorgenannten variablen Verpackungsbestandteile aufweist, insbesondere nur einen oder mehrere Verpackungsbestandteile aus den diskutierten Beispielen, nämlich Zwischenblätter, Unterlagen, Etiketten, usw.

Insbesondere kann der Schneidprozess und die weitere Verarbeitung der Lebensmittelportionen mehrspurig erfolgen und dabei spurindividuell regelbar sein. Dafür kann die Lebensmittelaufschneidemaschine mehrere Vorschubbänder aufweisen, die jeweils separat ansteuerbare Antriebe aufweisen. Mehrere Lebensmittelprodukte auf mehreren Vorschubbändern können durch ein oder mehrere Schneidmesser parallel aufgeschnitten werden. In den Wiegevorrichtungen kann für jede Spur und Lebensmittelportion separat das Gewicht erfasst werden. Dafür können mehrspurige Wiegevorrichtungen vorgesehen sein. Die Lebensmittelportionen können vor dem Verpacken in eine Formatanordnung gebracht werden.

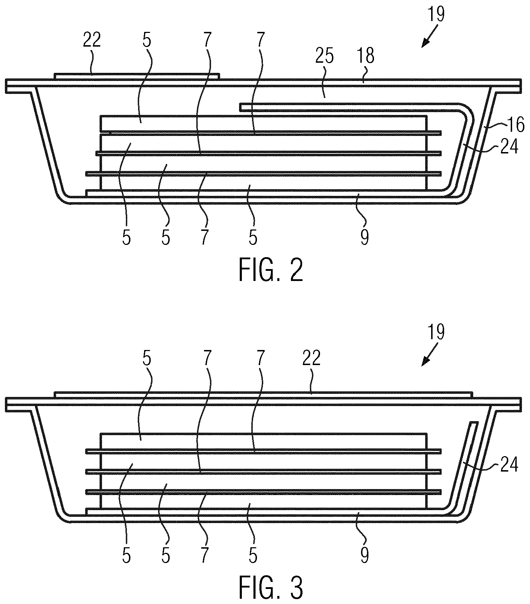

In Fig. 2 ist eine verpackte Lebensmittelportion 19 in Schnittansicht dargestellt. Die verpackte Lebensmittelportion 19 weist eine Verpackungsschale 16, bei der es sich insbesondere um eine tiefgezogene Kunststoffverpackungsschale handelt, und ein Verpackungsoberteil 18 auf, das insbesondere durch eine Folie gebildet wird, die auf die Verpackungsschale 16 aufgeschweißt oder aufgeklebt wird. Innerhalb der Verpackung ist eine Unterlage 9 angeordnet, auf der Lebensmittelscheiben 5 aufgestapelt sind, die jeweils von einem Zwischenblatt 7 getrennt werden. Die Unterlage 9 weist einen Seitenteil 24 und einen Oberteil 25 auf, die um die Lebensmittelscheiben umgeschlagen werden. Der Oberteil 25 kann bedruckt sein und Werbeinformationen oder sonstige Informationen zu der Lebensmittelportion enthalten. Zusätzlich kann auf dem Verpackungsoberteil 18 ein Etikett 22 aufgebracht sein, das ebenfalls bedruckt ist und Informationen zu der Lebensmittelportion enthält. Die Zwischenblätter 7 weisen jeweils eine unterschiedliche Länge auf, die sich lebensmittelproduktbedingt oder aber auch bedingt durch den Produktionsprozess ergeben kann. Vornehmlich stehen die Zwischenblätter 7 auf der stromaufwärtigen Portionsseite immer mit dem gleichen Überstand über die Lebensmittelscheiben 5 über. Dieser Überstand kann insbesondere durch den Abstand zwischen der Produktauflage an der Schneidkante und der Ausmündung der Zwischenblattbereitstellungsvorrichtung 8 bestimmt werden. Allerdings kann der Überstand auf der stromabwärtigen Portionsseite variieren. Teilweise können, wie in Fig. 2 gezeigt, die Zwischenblätter etwas zwischen den Lebensmittelscheiben zurückliegen, sodass es zu einem direkten Kontakt zwischen den Lebensmittelscheiben kommt.

Erfindungsgemäß wird in Abhängigkeit der Betriebsdaten ein variabler Tara-Wert bestimmt, der dem Gewicht dieser variablen Verpackungsbestandteile entspricht. In Fig. 3 ist eine weitere verpackte Lebensmittelportion 19 dargestellt, bei der das Etikett 22 größer ist und die Unterlage 9 kein Oberteil 25 aufweist, sondern lediglich den Seitenteil 24. Weiterhin sind die oberen beiden Zwischenblätter 7 länger als in der verpackten Lebensmittelportion 19 aus Fig. 2. Somit sind in Fig. 3 die variablen Verpackungsbestandteile 7, 9 und 22 gegenüber Fig. 2 variiert, wobei dies entweder sensorisch oder durch Vorgaben in der Steuerung über die Betriebsdaten erfasst werden kann, und daraus der variable Tara-Wert berechnet werden kann.

Die vorliegende Erfindung ermöglicht somit eine Erhöhung der Genauigkeit bei der Portionserstellung, insbesondere im Zusammenhang mit Zwischenblattbereitstellungsvorrichtungen. Dadurch wird eine weitere Optimierung des Aufschneidebetriebs hinsichtlich des gewichtsgenauen Portionierens erreicht. Das Packungszielgewicht wird unter Berücksichtigung des Anteils der variablen Verpackungsbestandteile pro Portion genauer erreicht. Folglich wird weniger Lebensmittelprodukt für die jeweiligen Portionen verbraucht, und dennoch die gesetzlichen Anforderungen erfüllt. Dies wird insbesondere ermöglicht, da die variablen Verpackungsbestandteile ebenfalls als Nicht-Lebensmittelprodukt anteilig erfasst werden, also als variabler Tara-Wert, und genauer in das Gewicht der verpackten Lebensmittelportion eingerechnet werden können.

## Patentansprüche

1. Lebensmittelverarbeitungssystem, mit
einer Lebensmittelaufschneidemaschine (1), die eingerichtet ist, Lebensmittelprodukte (4) zu Lebensmittelportionen (11) aufzuschneiden,
einer Verpackungsmaschine (17), die eingerichtet ist, die vollständigen Lebensmittelportionen (11) jeweils zu verpacken, und
wenigstens einer Wiegevorrichtung (12, 20),
wobei die Lebensmittelaufschneidemaschine (1) und/oder die Verpackungsmaschine (17) eingerichtet sind, die Lebensmittelportionen (11) jeweils mit einem variablen Verpackungsbestandteil (7, 9, 22) zu kombinieren, und
wobei mittels der wenigstens einen Wiegevorrichtung (12, 20) das Gewicht der jeweiligen Lebensmittelportion (11), umfassend den variablen Verpackungsbestandteil (7, 9, 22), bestimmt werden kann,
**dadurch gekennzeichnet, dass**
eine Steuerung (10, 13, 21, 23) vorgesehen ist, die eingerichtet ist, in Abhängigkeit von Betriebsdaten einen variablen Tara-Wert zu bestimmen, der dem Gewicht des variablen Verpackungsbestandteils (7, 9, 22) entspricht.

2. Lebensmittelverarbeitungssystem nach Anspruch 1, wobei eine Zwischenblattbereitstellungsvorrichtung (8) bei der Lebensmittelaufschneidemaschine (1) vorgesehen ist, wobei die Zwischenblattbereitstellungsvorrichtung (8) eingerichtet ist, Zwischenblätter (7) zwischen bzw. unter Lebensmittelscheiben (5) der Lebensmittelportion (11) einzubringen.

3. Lebensmittelverarbeitungssystem nach Anspruch 1 oder 2, wobei die Wiegevorrichtung (20) nach der Verpackungsmaschine (17) angeordnet ist, und wobei die Wiegevorrichtung (20) eingerichtet ist, das Gewicht der fertig verpackten Lebensmittelportion (19) zu bestimmen.

4. Lebensmittelverarbeitungssystem nach einem der vorangehenden Ansprüche, wobei die Wiegevorrichtung (12) nach der Lebensmittelaufschneidemaschine (1) und vor der Verpackungsmaschine (17) angeordnet ist, und wobei die Wiegevorrichtung (12) eingerichtet ist, das Gewicht der aufgeschnittenen Lebensmittelportion (11) zu bestimmen.

5. Lebensmittelverarbeitungssystem nach einem der vorangehenden Ansprüche, wobei das Lebensmittelverarbeitungssystem so eingerichtet ist, dass das mit der Wiegevorrichtung (12, 20) oder den Wiegevorrichtungen (12, 20) bestimmte Gewicht bei der Regelung des Betriebs der Lebensmittelaufschneidemaschine (1) berücksichtigt wird, um die Genauigkeit des Gewichts der Lebensmittelportionen (11, 19) bzw. von Gruppen von Lebensmittelportionen (11, 19) zu erhöhen.

6. Verfahren zum Verarbeiten von Lebensmittelprodukten (4) in einem Lebensmittelverarbeitungssystem, wobei das Verfahren die folgenden Schritte umfasst:
Aufschneiden eines Lebensmittelproduktes (4) zu wenigstens einer Lebensmittelportion (11), Kombinieren der Lebensmittelportion (11) mit Verpackungsmaterial (7, 9, 16, 18, 22), und Bestimmen des Gewichts der Lebensmittelportion (11, 19),
**dadurch gekennzeichnet,**
**dass** ausgehend von Betriebsdaten des Lebensmittelverarbeitungssystems ein variabler Tara-Wert für die Lebensmittelportion (11, 19) bestimmt wird, der dem Gewicht eines variablen Verpackungsbestandteils (7, 9, 22) entspricht.

7. Verfahren nach Anspruch 6, wobei die Lebensmittelportion (11) in einer Verpackung (16, 18) verpackt wird, deren Gewicht bekannt ist und einen konstanten Tara-Wert bildet.

8. Verfahren nach Anspruch 7, wobei der variable Verpackungsbestandteil ein Etikett (22) umfasst, das auf die Verpackung aufgebracht oder darin eingelegt wird.

9. Verfahren nach nach Anspruch 7 oder 8, wobei der variable Verpackungsbestandteil eine Unterlage (9) umfasst, auf der die Lebensmittelportion angeordnet wird.

10. Verfahren nach einem der Ansprüche 6 bis 9, wobei der variable Verpackungsbestandteil Zwischenblätter (7) umfasst, die beim Aufschneiden zwischen die Lebensmittelscheiben (5) der Lebensmittelportion (11) eingebracht werden.

11. Verfahren nach einem der Ansprüche 6 bis 10, wobei die Betriebsdaten einen Vorgabewert bezüglich des variablen Verpackungsbestandteils (7, 9, 22) umfassen.

12. Verfahren nach einem der Ansprüche 6 bis 11, wobei die Betriebsdaten einen Messwert bezüglich des variablen Verpackungsbestandteils (7, 9, 22) umfassen.

13. Verfahren nach einem der Ansprüche 6 bis 12, wobei die Betriebsdaten einen Vorgabewert oder Messwert bezüglich der Lebensmittelportionen (11) umfassen.

14. Verfahren nach einem der Ansprüche 6 bis 13, wobei die Betriebsdaten einen Messwert oder Vorgabewert bezüglich der Lebensmittelprodukte (4) umfassen.

## Claims

1. A food processing system, comprising
a food slicing machine (1) adapted to slice food products (4) into food portions (11),
a packaging machine (17) adapted to respectively package the complete food portions (11), and at least one weighing device (12, 20),
wherein the food slicing machine (1) and/or the packaging machine (17) are adapted to combine each of the food portions (11) with a variable packaging component (7, 9, 22), and
wherein by means of the at least one weighing device (12, 20) the weight of the respective food portion (11) including the variable packaging component (7, 9, 22) can be determined,
**characterized in that**
a controller (10, 13, 21, 23) is provided which is adapted to determine, as a function of operating data, a variable tare value which corresponds to the weight of the variable packaging component (7, 9, 22).

2. The food processing system according to claim 1, wherein a device (8) for providing intermediate sheets is provided at the food slicing machine (1), wherein the device (8) for providing intermediate sheets is adapted to insert intermediate sheets (7) between or under food slices (5) of the food portion (11).

3. The food processing system according to claim 1 or 2, wherein the weighing device (20) is arranged downstream of the packaging machine (17), and wherein the weighing device (20) is adapted to determine the weight of the final packaged food portion (19).

4. The food processing system according to any one of the preceding claims, wherein the weighing device (12) is arranged downstream of the food slicing machine (1) and upstream of the packaging machine (17), and wherein the weighing device (12) is adapted to determine the weight of the sliced food portion (11).

5. The food processing system according to any one of the preceding claims, wherein the food processing system is adapted to take into account the weight determined by the weighing device (12, 20) or weighing devices (12, 20) for controlling the operation of the food slicing machine (1) to increase the accuracy of the weight of the food portions (11, 19) and groups of food portions (11, 19), respectively.

6. A method for processing food products (4) in a food processing system, the method comprising the steps of slicing a food product (4) into at least one food portion (11), combining the food portion (11) with packaging material (7, 9, 16, 18, 22), and determining the weight of the food portion (11, 19), **characterized in that** a variable tare value for the food portion (11, 19) is determined on the basis of operating data of the food processing system, which tare value corresponds to the weight of a variable packaging component (7, 9, 22).

7. The method according to claim 6, wherein the food portion (11) is packaged in a package (16, 18) the weight of which is known and forms a constant tare value.

8. The method according to claim 7, wherein the variable packaging component comprises a label (22) applied to or inserted into the package.

9. The method according to claim 7 or 8, wherein the variable packaging component comprises a base (9) on which the food portion is placed.

10. The method according to any one of claims 6 to 9, wherein the variable packaging component comprises intermediate sheets (7) inserted between the food slices (5) of the food portion (11) during slicing.

11. The method according to any one of claims 6 to 10, wherein the operating data comprise a default value relating to the variable packaging component (7, 9, 22).

12. The method according to any one of claims 6 to 11, wherein the operating data comprise a measured value relating to the variable packaging component (7, 9, 22).

13. The method according to any one of claims 6 to 12, wherein the operating data comprise a default value or a measured value relating to the food portions (11).

14. The method according to any one of claims 6 to 13, wherein the operating data comprise a measured value or a default value relating to the food products (4).

## Revendications

1. Système de transformation d'aliments, avec
une machine de découpe d'aliments (1) conçue pour découper des produits alimentaires (4) en portions alimentaires (11),
une machine d'emballage (17) conçue pour emballer respectivement les portions alimentaires (11) complètes, et
au moins un dispositif de pesage (12, 20) ;
dans lequel la machine de découpe d'aliments (1) et/ou la machine d'emballage (17) sont conçues pour combiner les portions alimentaires (11) respectivement avec un composant d'emballage variable (7, 9, 22), et
dans lequel le poids de la portion alimentaire (11) respective, composant d'emballage variable (7, 9, 22) inclus, peut être déterminé au moyen du au moins un dispositif de pesage (12, 20),
**caractérisé en ce que**
un dispositif de commande (10, 13, 21, 23) conçu pour, en fonction de données de fonctionnement, déterminer une valeur de tare variable correspondant au poids du composant d'emballage variable (7, 9, 22) est prévu.

2. Système de transformation d'aliments selon la revendication 1, dans lequel un dispositif d'approvisionnement en feuilles intermédiaires (8) est prévu au côté de la machine de découpe d'aliments (1), dans lequel le dispositif d'approvisionnement en feuilles intermédiaires (8) est conçu pour insérer des feuilles intermédiaires (7) entre ou sous des tranches d'aliment (5) de la portion alimentaire (11).

3. Système de transformation d'aliments selon la revendication 1 ou 2, dans lequel le dispositif de pesage (20) est agencé en aval de la machine d'emballage (17), et dans lequel le dispositif de pesage (20) est conçu pour déterminer le poids de la portion alimentaire (19) emballée finie.

4. Système de transformation d'aliments selon l'une quelconque des revendications précédentes, dans lequel le dispositif de pesage (12) est agencé en aval de la machine de découpe d'aliments (1) et en amont de la machine d'emballage (17), et dans lequel le dispositif de pesage (12) est conçu pour déterminer le poids de la portion alimentaire (11) découpée.

5. Système de transformation d'aliments selon l'une quelconque des revendications précédentes, dans lequel le système de transformation d'aliments est conçu de sorte que le poids déterminé par le dispositif de pesage (12, 20) ou les dispositifs de pesage (12, 20) est pris en compte pour la régulation du fonctionnement de la machine de découpe d'aliments (1) afin d'augmenter la précision du poids des portions alimentaires (11, 19) ou de groupes de portions alimentaires (11, 19).

6. Procédé de transformation de produits alimentaires (4) dans un système de transformation d'aliments, dans lequel le procédé comprend les étapes ci-dessous consistant à :
découper un produit alimentaire (4) en au moins une portion alimentaire (11), combiner la portion alimentaire (11) avec un matériau d'emballage (7, 9, 16, 18, 22),
et
déterminer le poids de la portion alimentaire (11, 19),
**caractérisé en ce que**,
une valeur de tare variable correspondant au poids d'un composant d'emballage variable (7, 9, 22) est déterminée pour la portion alimentaire (11, 19) à partir de données de fonctionnement du système de transformation d'aliments.

7. Procédé selon la revendication 6, dans lequel la portion alimentaire (11) est emballée dans un emballage (16, 18) dont le poids est connu et forme une valeur de tare constante.

8. Procédé selon la revendication 7, dans lequel le composant d'emballage variable comprend une étiquette (22) qui est appliquée sur l'emballage ou insérée dans celui-ci.

9. Procédé selon la revendication 7 ou 8, dans lequel le composant d'emballage variable comprend un support (9) sur lequel est agencée la portion alimentaire.

10. Procédé selon l'une quelconque des revendications 6 à 9, dans lequel le composant d'emballage variable comprend des feuilles intermédiaires (7) qui sont mises en place entre les tranches d'aliment (5) de la portion alimentaire (11) lors de la découpe.

11. Procédé selon l'une quelconque des revendications 6 à 10, dans lequel les données de fonctionnement comprennent une valeur de référence concernant le composant d'emballage variable (7, 9, 22).

12. Procédé selon l'une quelconque des revendications 6 à 11, dans lequel les données de fonctionnement comprennent une valeur de mesure concernant le composant d'emballage variable (7, 9, 22).

13. Procédé selon l'une des revendications 6 à 12, dans lequel les données de fonctionnement comprennent une valeur de référence ou une valeur de mesure concernant les portions alimentaires (11).

14. Procédé selon l'une quelconque des revendications 6 à 13, dans lequel les données de fonctionnement comprennent une valeur de mesure ou une valeur de référence concernant les produits alimentaires (4).
